## Europäisches Patentamt
## European Patent Office
## Office européen des brevets

(19)

(11) Veröffentlichungsnummer: **0 081 747**
**B1**

(12) ## EUROPÄISCHE PATENTSCHRIFT

(45) Veröffentlichungstag der Patentschrift :
26.03.86

(51) Int. Cl.⁴ : **G 21 C 17/06**

(21) Anmeldenummer : **82111095.4**

(22) Anmeldetag : **01.12.82**

(54) **Einrichtung zum Auffinden defekter innerhalb kompletter Brennelemente wassergekühlter Kernreaktoren angeordneter Brennstäbe.**

(30) Priorität : **18.12.81 DE 3150249**

(43) Veröffentlichungstag der Anmeldung :
**22.06.83 Patentblatt 83/25**

(45) Bekanntmachung des Hinweises auf die Patenterteilung : **26.03.86 Patentblatt 86/13**

(84) Benannte Vertragsstaaten :
**BE CH DE FR IT LI SE**

(56) Entgegenhaltungen :
**EP-A- 0 063 681**
**FR-A- 2 147 725**
**FR-A- 2 299 633**
**FR-A- 2 341 183**
**FR-A- 2 389 973**

(73) Patentinhaber : **BROWN BOVERI REAKTOR GmbH**
**Dudenstrasse 44**
**D-6800 Mannheim 1 (DE)**

(72) Erfinder : **Scharpenberg, Rainer, Ing. (grad.)**
**Im Krappenklingen 32**
**D-6948 Waldmichelbach (DE)**

(74) Vertreter : **Dahlmann, Gerhard, Dipl.-Ing. et al**
**c/o Brown Boveri & Cie., AG Zentralbereich ZPT/P**
**Postfach 351**
**D-6800 Mannheim (DE)**

EP 0 081 747 B1

Jouve, 18, rue St-Denis, 75001 Paris, France

## Beschreibung

Die Erfindung betrifft eine Einrichtung zum Auffinden defekter innerhalb kompletter Brennelemente wassergekühlter Kernreaktoren angeordneter Brennstäbe mit einem in die Räume zwischen die Hüllrohre der Brennstäbe einfahrbaren Fingerpaar wobei ein Finger den Sender und der andere Finger den Empfänger einer Ultraschallprüfeinrichtung trägt, das zu prüfende Hüllrohr zwischen Sender und Empfänger angeordnet ist und eine Intensitätsänderung zwischen Sender und Empfänger ein Indiz für defekte Brennstäbe ist.

Eine derartige Einrichtung ist auf Seite 827-831 des Buches « Reaktortagung März 1980 » beschrieben. Dabei wird ein Hüllrohr von einem Sender zu einem auf der gegenüberliegenden Seite des Hüllrohres befindlichen Empfänger durchschallt. Das Fingerpaar prüft dann ein Hüllrohr nach dem anderen, so daß für ca. 200 Brennstäbe eines Brennelements doch ein erheblicher Zeitaufwand erforderlich ist, der letztendlich an der Verfügbarkeit der Kernreaktoranlage verloren geht. Durch das häufige Positionieren des Fingerpaares in den nebeneinander angeordneten Gassen wird der Zeitaufwand noch erhöht.

Aus der DE-A-26 05 962 sind zwar kammartig angeordnete mit Ultraschallprüfköpfen bestückte Finger zur Detektierung defekter Brennstäbe an sich bekannt. Dabei erfolgt keine Durchschallung der Hüllrohre und demzufolge auch keine Erfassung der eventuell intensitätsgeschwächten Schallwellen durch einen Empfänger. Es findet vielmehr, unterstützt durch das Kontaktieren über eine Feder, eine Auswertung der Resonanz der ausgesandten Schwingungen statt.

Die Erfindung stellt sich die Aufgabe eine Einrichtung anzugeben, mit der die Prüfzeit erheblich verringert und die Positionsgenauigkeit erhöht wird.

Aus der älteren EP-A-63 681 ist zwar eine kammartige Anordnung mehrerer Finger bekannt. Diese Finger kragen jedoch in verschiedenen Längen von dem Träger aus, weil das nebeneinander anordnen des Empfängerteils der einen Sonde und des Sendeteils der anderen Sonde, dort nicht für möglich gehalten wurde.

Gelöst wird die Aufgabe erfindungsgemäß dadurch, daß dem ersten Fingerpaar weitere Finger nebengeordnet sind, wobei alle Finger in an sich bekannter Weise von einem Träger gehalten sind, daß die während des Prüfvorganges an zwei Hüllrohre angrenzenden Finger einen als Sender oder Empfänger umschaltbaren Ultraschallschwinger aufweisen, während dem ersten Finger einer Reihe ein nur als Sender und dem letzten Finger ein nur als Empfänger wirkender Schwinger zugeordnet ist und daß nach dem Erreichen der Prüfposition die zwischen zwei Ultraschallschwingern angeordneten Hüllrohre nacheinander durchschallt werden.

Durch die Verwendung von durch Umschaltung sowohl als Sender als auch als Empfänger einsetztbarer Ultraschallelemente (Schwinger) wird das gleichzeitige Anfahren mehrerer Brennstäbe überhaupt erst möglich. Die umschaltbaren Elemente benötigen nämlich mehr Platz als die nur als Sender oder Empfänger eingesetzten Elemente und lassen sich daher ebenso problemlos in die höchstens zwei Millimeter breiten Zwischenräume zwischen den Hüllrohren einführen. Eine einfache Addierung des aus dem Stand der Technik bekannten Fingerpaares wäre aus Platzgründen der vorliegende Erfolg versagt geblieben. An sich bekannte elektronische Schaltvorgänge erlauben in Bruchteilen einer Sekunde das nacheinander vorzunehmende Durchschallen der von einer Fingerreihe eingeschlossenen Hüllrohre und der Schallaufzeiten bzw. Intensitätsminderungen, so daß eine Zeiteinsparung in der Größenordnung eines Faktors zehn durchaus realistisch ist. Die Zeiteinsparung wird weiterhin dadurch erhöht, daß eine genaue Positionierung der Einrichtung nicht für jeden Brennstab erforderlich ist, wobei zusätzlich die Gefahr einer Beschädigung der Finger wesentlich gemindert wird.

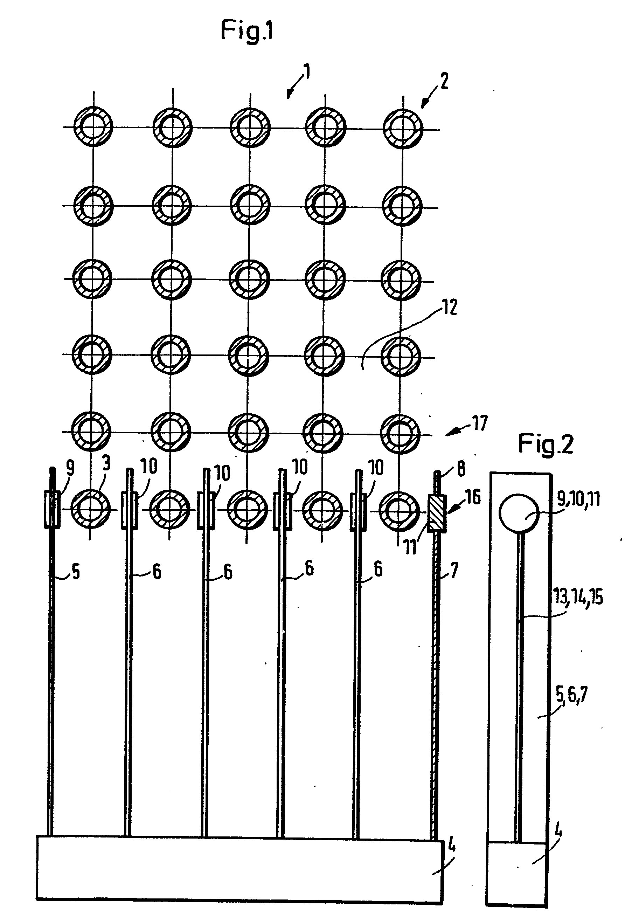

Anhand der schematischen Zeichnungen Fig. 1 und 2 sowie eines Ausführungsbeispiels wird die erfindungsgemäße Einrichtung beschrieben. Dabei zeigt

Figur 1 einen Querschnitt durch ein Brennstabbündel eines Brennelements im Bereich der Hüllrohre mit der Einrichtung in Prüfposition und

Figur 2 die Seitenansicht eines Fingers.

Zum Zwecke einer übersichtlichen Darstellung ist in Fig. 1 ein Brennelement 1 mit 6×6 Brennstäben 2 dargestellt, wobei lediglich die Schnittfläche der Hüllrohre 3 zu erkennen ist. Von einem Träger 4 kragen Finger 5, 6, 7 gleicher geometrischer Form aus. Sie bestehen aus biegsamen Blechen von ca. einem Millimeter Dicke und ca. zwanzig Millimeter Breite. Die Einrichtung weist mit sieben Fingern einen Finger mehr auf als Hüllrohre in einer Reihe angeordnet sind. Es sei darauf hingewiesen, daß bei einem Brennelement für einen Kernreaktor der heutigen 1 300 MW-Klasse eine Konfiguration von 17×17 Brennstäben üblich ist. Für ein solches Brennelement würde die Einrichtung achtzehn Finger aufweisen, wodurch die Zeiteinsparung beim Prüfvorgang eindeutiger erklärbar ist. In der Nähe ihres freien Endes 8 tragen die Finger 5, 6, 7 Ultraschallschwinger 9, 10, 11, die alle die gleiche Abmessung und die gleiche geometrische Anordnung zueinander aufweisen. Sie ragen höchstens ein bis zwei Zehntel Millimeter über die Dicke der Finger hinaus und lassen sich daher leicht durch die Räume 12 zwischen den Hüllrohren 3 bewegen. Charakteristisch für die Erfindung sind die Ultraschallschwinger 10, die zwischen zwei Hüllrohren 3 angeordnet sind, über eine elektrische Zuleitung 13 derart umschaltbar, daß sie wahlweise als Sender oder als Empfänger der Schallwellen dienen. Der Schwinger 9 im ersten Finger 5 der Reihe ist nur als Sender und der Schwinger 11 im letzten Finger 7 der Reihe ist nur als Empfänger ausgelegt. Von allen Fingern führen weitere elektrische Leitungen 14 zu einer nicht dargestellten Auswertestation zur Erfassung der Laufzeiten sowie der Intensitätsminderungen der Schallwellen. Über ebensolche Leitungen 15 werden die Schwinger erregt und dadurch die Schallwellen erzeugt. Sind die Finger mit den Schwingern in ihre Prüfposition gefahren erfolgt unter Verwendung elektronischer Schaltelemente unter präziser Umschaltung der Schwinger auf Senden oder Empfangen nacheinander die Durchschallung der Hüllrohre der Hüllrohrreihe 16. Die Durchschallung einer solchen Reihe ist in Bruchteilen einer Sekunde abgeschlossen. Mit Hilfe eines nicht dargestellten Fahrmechanismus wird der Träger mit den Fingern zur nächsten Hüllrohrreihe 17 bewegt. Die Durchschallungszeiten sind wegen ihrer geringen Dauer vernachlässigbar, so daß die Einrichtung auch bei einer kontinuierlichen Fahrweise im Bereich der Hüllrohre exakte Ergebnisse liefert.

Die erfindungsgemäße Einrichtung erreicht mit einem Positioniervorgang eine ganze Hüllrohrreihe und bringt eine erhebliche Zeitersparnis.

## Patentanspruch

Einrichtung zum Auffinden defekter innerhalb kompletter Brennelemente wassergekühlter Kernreaktoren angeordneter Brennstäbe mit einem in die Räume zwischen die Hüllrohre der Brennstäbe einfahrbaren Fingerpaar wobei ein Finger den Sender und der andere Finger den Empfänger einer Ultraschallprüfeinrichtung trägt, das zu prüfende Hüllrohr zwischen Sender und Empfänger angeordnet ist und eine Intensitätsänderung zwischen Sender und Empfänger ein Indiz für defekte Brennstäbe ist, dadurch gekennzeichnet, daß dem ersten Fingerpaar (5, 6) weitere Finger (6, 7) nebengeordnet sind, wobei alle Finger (5, 6, 7) in an sich bekannter Weise von einem Träger (4) gehalten sind, daß die während eines Prüfvorganges an zwei Hüllrohre (3) angrenzenden Finger (6) einen als Sender oder Empfänger umschaltbaren Ultraschallschwinger (9, 10, 11) aufweisen, während dem ersten Finger (5) einer Reihe ein nur als Sender wirkender Schwinger (9) und dem letzten Finger (7) einer Reihe ein nur als Empfänger wirkender Schwinger (11) zugeordnet ist und daß nach dem Erreichen der Prüfposition die jeweils zwischen zwei Schwingern (9, 10, 11) angeordneten Hüllrohre nacheinander durchschallt werden.

## Claim

Device for the location of faulty fuel rods disposed within complete fuel elements of water-cooled nuclear reactors by means of a finger pair insertable into the gaps between the fuel cans, one finger carrying the transmitter and the other finger the receiver of an ultrasonic testing device, the fuel can to be tested being disposed between transmitter and receiver and a change in intensity between transmitter and receiver being indicative of faulty fuel rods, characterized in that further fingers (6, 7) are disposed additionally to the first finger pair (5, 6), all the fingers (5, 6, 7) being supported in a manner known per se by one carrier (4), that the fingers (6) adjacent to two fuel cans (3) during the test operation incorporate an ultrasonic vibrator (9, 10, 11) which is switchable as transmitter or receiver, while a vibrator (9) acting purely as a transmitter is allocated to the first finger (5) of a row and a vibrator (11) acting purely as a receiver to the last finger (7) of a row, and that once the test position is reached the fuel cans disposed in each case between two ultrasonic vibrators (9, 10, 11) are ultrasonically irradiated one after the other.

## Revendication

Dispositif pour détecter des crayons combustibles défectueux situés à l'intérieur d'assemblages combustibles complets de réacteurs nucléaires refroidis par eau, avec une paire de doigts pouvant être engagés dans les espaces entre les tubes de gainage des crayons combustibles, un doigt portant l'émetteur et l'autre doigt le récepteur d'un appareil de contrôle aux ultrasons, le tube de gainage à contrôler étant disposé entre l'émetteur et le récepteur, et une variation d'intensité entre l'émetteur et le récepteur constituant une indication de la présence de crayons combustibles défectueux, caractérisé par le fait que d'autres doigts (6, 7) sont disposés à côté de la première paire de doigts (5, 6), tous les doigts (5, 6, 7) étant portés d'une manière en soi connue par un support (4), que les doigts (6) qui, au cours d'une opération de contrôle, sont voisins de deux tubes de gainage (3) sont chacun munis d'un vibreur aux ultrasons (10) commutable comme émetteur ou comme récepteur, tandis que le premier doigt (5) d'une série de doigts est muni d'un vibreur (9) agissant uniquement comme émetteur et le dernier doigt (7) d'une série de doigts d'un vibreur (11) agissant uniquement comme récepteur, et qu'à la suite de l'atteinte de la position de contrôle, les différents tubes de gainage disposés chacun entre deux vibreurs (9, 10, 11) sont successivement examinés aux ultrasons.

## Fig.1

## Fig.2